# EUROPEAN PATENT SPECIFICATION

(11) **EP 2 203 044 B1**
(45) Date of publication and mention of the grant of the patent: **11.07.2012**
(21) Application number: 08840710.1
(22) Date of filing: 07.10.2008
(51) Int. Cl.: A01K 75/06, A01K 91/00, B29C 47/02

(54) **A METHOD FOR PRODUCTION OF A SINK LINE WITH SINK ELEMENTS**
VERFAHREN ZUR HERSTELLUNG EINER SENKLEINE MIT SENKELEMENTEN
PROCÉDÉ DE FABRICATION D'UNE LIGNE DE FOND AVEC ÉLÉMENTS DE LEST

(30) Priority: 16.10.2007 DK 200701494
(43) Date of publication of application: 07.07.2010
(73) Proprietor: Frydendahl Im- Og Export A/S, 6960 Hvide Sande (DK)
(72) Inventor: PIIRTO, Timo, 60150 Seinäjoki (FI)
(74) Representative: Gregersen, Niels Henrik
(86) International application number: PCT/DK2008/050250
(87) International publication number: WO 2009/049628

(56) References cited:
- WO-A1-02/28176
- CA-A1- 2 042 643
- FI-U1- 3 064
- FI-U1- 3 064
- JP-A- 49 011 683
- DATABASE WPI Week 198815, Derwent Publications Ltd., London, GB; AN 1988-103209, XP008135703 & JP 55 118329 A (TATSUTA KINZOKU KOGYO KK) 11 September 1980
- DATABASE WPI Week 200706, Derwent Publications Ltd., London, GB; AN 2007-049723, XP008135702 & JP 2006 320627 A (SANKO SHOJI KK) 30 November 2006

## Description

### Field of the Invention

The present invention relates to a method for production of a sink lines with sinkers and of the kind indicated in the preamble of claim 1.

### Background of the Invention

In the production of fishing nets, it is prior art to use sink or weight lines with sinkers or weight elements consisting of a core yarn with a core of lead which on the core yarn is divided into relatively short weight elements, which subsequently are provided with an external stocking with the object of achieving a flexible sinking or weight line.

However, for environmental reasons lead has now been banned in connection with fishing equipment, including sinking or weight lines for fishing nets.

From Finnish utility model registration FI 0003064 U1 is known a sink or weight line which is enclosed by a stocking, and which has a weight element with a core yarn with a surrounding core of a weight material consisting of a weight material, which consists of a mixture of crushed or powdered mineral material and a binder of a suitable plastic material. This prior art weight element is made by extrusion of the core of the said mixtures around the core yarn. The core of the weight element is subsequently divided into relatively short weight elements which are still connected with the core yarn.

### Object of the Invention

On this background, it is the object of the invention to provide an improved method for the production of a sink line with sinkers combining environmental friendliness with easy production and good structural strength and application properties.

### Description of the Invention

The method according to claim 1 of the invention is characterized in that the sinkers are connected by extrusion around the core yarn while it assumes a shortened condition, and that the sinkers after extrusion and cooling are divided into mutually separate; relatively short sinkers which are still connected to the core yarn.

In a simple way is hereby achieved a new and improved method for the production of sink line with sinkers for use in production of a flexible weight or sink line that combines environmental friendliness with easy production and good structural strength and application properties.

It will be understood that the sinkers are connected by extrusion to the core yarn while it is still being in the shortened condition, and that the sinkers by the subsequent division into relatively short and still coherent sinkers are imparted extraordinary flexibility in that the twined or gathered core yarn is released, ensuring an actual mutual spacing between the individual sinkers, such that these will be arranged "as beads on a string" in form of the core yarn.

Hereby is achieved that a sinking or weight line with sinkers or weight elements, when subsequently provided with a usual external stocking-like sleeve, is able to maintain an uncommonly good pliability and flexibility in general.

Appropriately, by the method according to the invention is used a core yarn consisting of longitudinal filaments and imparted the shortened condition in that the core yarn is twined before extrusion.

Or, by the method according to the invention there is used a core yarn consisting of longitudinal filaments and imparted the shortened condition in that the core yarn is gathered before extrusion.

By the method according to the invention and with the object of ensuring the said shortened condition of the core yarn before extrusion, a thermo labile material, e.g. an ionomer wax, is used for temporarily fixing the core yarn, with the intention of maintaining the shortened condition until the fixing material during extrusion is melted together with core material, e.g. polyethylene.

### Description of the Drawing

The invention is now explained in detail in connection with the drawing, in which:
- Fig. 1: shows a plan view of a prior art sinking or weight line, cf. FI 0003064 U1, as seen in longitudinal section;
- Fig. 2: shows a schematic plan view of an apparatus for producing a prior art sinking or weight line, cf. FI 0003064 U1;
- Fig. 3: shows an elementary sketch for illustrating production an embodiment of a sinker according to the invention; and
- Fig. 4: shows a detail for illustrating the production of a sinker according to the invention.

### Detailed Description of the Invention

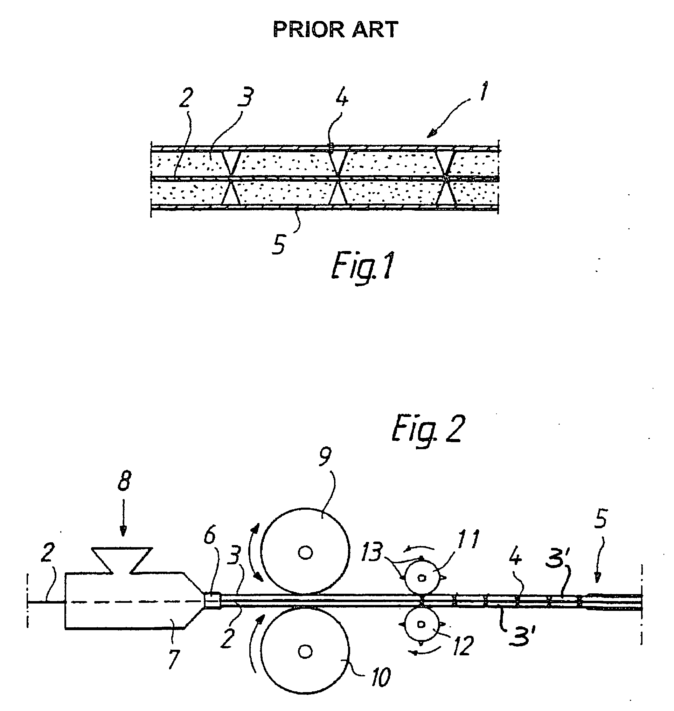

The prior art sinking or weight line 1 shown in Fig. 1, cf. Finnish utility model registration FI 0003064 U1, for example representing a lower line of a fishing net, includes a core yarn 2 and sinking or weight material 3 arranged around the core yarn 2. The sinking or weight material forms a core 3 with mainly circular cross-section in the longitudinal direction of the line and arranged around the core yarn, which is preferred made of heat-resistant material, e.g. carbon fibres.

In order to improve the flexibility of the sink line 1, the core 3 is divided into separate parts in a way know by itself, as between these notches 4 or similar are formed, predominantly extending inwards to the core yarn 2. The shown notches 4 have the purpose of enhancing flexibility and thereby the handling of the sink line 1.

In addition, Fig. 1 shows an external stocking 5 which is braided around the core 3, and which may consist of any suitable stocking braiding material, e.g. a suitable plastic thread or a plastic coating.

The weight material constituting the core 3 is composed of a crushed mineral rock material and a binder, preferably a plastic material.

Fig. 2 shows a known embodiment of a plant for production a sinking or weight line, cf. the Finnish utility model registration FI 0003064 U1. Crushed/powdered mineral material, e.g. rock, and binder, e.g. plastic material, are supplied at 8 to an extruder 7. The plastic material is already melted, or it is heated and melted in the extruder 7 as the melted plastic material and powdered rock material (stone or rock) are mixed together.

The mixture of mineral powder and plastic material is then extruded through a die 6 with the object of forming a uniform core 3 around the core yarn 2 running continuously out from the die 6. After production, the core 3 is cooled, divided into uniform core parts 3' and rolled up.

Alternatively, with the intention of production the core 3 more compact, the weight or sink line may be pressed between two pressing wheels 9 and 10 with oppositely shaped depressions in the pressing face, preferably while it is still hot.

Moreover, it may be further advantageous that the mixture of mineral powder and plastic material passes through a compactor before the mixture is supplied to the extruder, as it has appeared that the self-weight of the sinkers thereby may be increased with up to 20%.

With the purpose of this percentage weight increase of the sinkers, it may be further advantageous that a combined machine is used, including a compactor as well as an extruder, preferably in the said sequence.

The division is performed in a way known per se by means of two counterrotating wheels 11 and 12 which are provided with projections 13 intended for shaping the said notches 4 such that the core 3 is divided into uniform core parts 3' which are still connected with the core yarn 2. The stocking 5 may then in a known way be made by braiding directly externally upon the core 3 divided into uniform core parts 3'.

However, it has appeared to be problematic to achieve sufficiently good flexibility by the hereby described prior art method for production sinking or weight lines with sinkers of the actual kind.

More specifically, it has been associated with great disadvantages that a real spacing between the separated parts into which the sinkers are divided immediately after extrusion has not been feasible to establish. Simply speaking, it has been almost impossible to achieve a real optimising the mutual separation into separate sinking or weight elements which are still securely connected to the core yarn.

When optimal division of the weight or sinker element into separate sinkers has been achieved, it is most often at the expense of serious problems with inadvertent cutting of the core yarn, such that subsequent finishing of the sink line by braiding of the outer stocking was substantially disturbed.

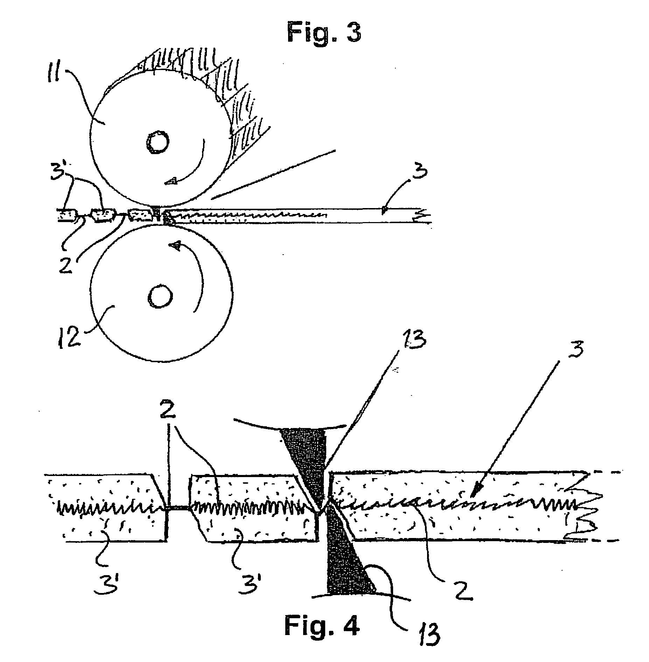

The present invention, which is described in more detail with reference to Figs. 3 and 4, has thus provided a quite significant breakthrough in the production of sink lines with sinkers for use in production of e.g. fishing nets.

As most clearly shown in Fig. 4, the core yarn 2 has been shortened before the extrusion (Fig. 2), either by twining the core yarn 2 or by gathering it. Most importantly it is, however, that the core yarn 2 as a whole is fixed in the thus shortened condition, until the core yarn 2 has been fastened to the surrounding core material 3 by the extrusion.

Only by the subsequent cutting of the core material 3 by passage between the toothed wheels 11 and 12 and the projections 13, an immediate separation into separate core parts 3' will take place, as by this operation between the separate core parts 3' the core yarn 2 is allowed to return again to its original greater length. In other words, the core yarn 2 shortened in advance still remains shortened internally in the separate core parts 3', while the core yarn 2 in the separation zone between the individual core parts 3' is allowed to be elongated such that a real mutual spacing between the core parts 3' is provided.

In that connection, it is important to note that the projections 13 on respective toothed wheels (Figs. 3 and 4) do not get in direct contact with each other, i.e. damage or cutting of the core yarn 2 cannot occur, where yarn 2 will be provided space for the described elongation, cf. Fig. 4, such that a clear mutual separation between individual core parts 3' is established in a secure way.

Preferably, the sink line is designed such that the sinking or weight material consists of crushed granite or corresponding rock and a binder, e.g. polyethylene or other suitable plastic material. The mixing ratio between crushed granite (rock) and binder is suitably 80-95% granite and 5-20% binder.

Finally, it is to be mentioned that the disclosed sinking or weight line with sinkers or weight elements according to the invention can be applied more generally to the manufacture of sinking and weight lines which e.g. also find application in quite different fields, such as the furniture and curtain fields, where it may be relevant to hold items stretched out by providing e.g. a lower seam of a curtain with a weight line according to the invention.

## Claims

1. A method for production a sink line (1) with sinkers (3), by way of example for a fishing net, said sink line (1) including a central longitudinal core yarn (2), said sinkers (3) enclosing the core yarn (2) in a concentric way and consisting of a weight material with a specific gravity greater than 1, said sinkers (3) are formed by extrusion as an elongated sausage of a plastic mass consisting of a mixture of powdered mineral material and a binder in the form of a suitable plastic material, **characterized in that** the sinkers (3) are connected by extrusion around the core yarn (2) while it assumes a shortened condition, and that the sinkers (3) after extrusion and cooling are divided into mutually separate, relatively short sinkers (3') which are still connected to the core yarn (2).

2. Method according to claim 1, **characterized in that** there is used a core yarn (2) consisting of longitudinal filaments, and that the core yarn (2) is imparted the shortened condition **in that** the core yarn (2) is twined before the extrusion.

3. Method according to claim 1, **characterized in that** there is used a core yarn (2) consisting of longitudinal filaments, and that the core yarn (2) is imparted the shortened condition **in that** the core yarn (2) is gathered before the extrusion.

4. Method according to claim 2 or 3, **characterized in that** the core yarn (2) shortened by twining or gathering is temporarily fixed in the shortened condition by means of a thermo labile material, by way of example an ionomer wax.

## Patentansprüche

1. Verfahren zum Herstellen einer Senkleine (1) mit Senkgewichten (3), z.B. für ein Fischnetz, wobei die Senkleine (1) einen zentralen Längskernfaden (2) aufweist, wobei die Senkgewichte (3) den Kernfaden (2) konzentrisch umschliessen und aus einem Gewichtmaterial mit einer relativen Dichte von mehr als 1 besteht, wobei die Senkgewichte (3) durch Extrudieren wie eine längliche Wurst aus einem aus einer Mischung von pulvrigem Mineralmaterial bestehender Kunststoffmasse und einem Bindemittel in Form von einem geeigneten Kunststoff gebildet sind, **dadurch gekennzeichnet, dass** die Senkgewichte (3) durch Extrudieren um den Kernfaden (2), indem er einen abgekürzten Zustand annimmt, verbunden werden, und dass die Senkgewichte (3) nach dem Extrudieren und Abkühlen in gegenseitig getrennte, relativ kurze Senkgewichte (3'), die immer noch mit dem Kernfaden (2) verbunden sind, geteilt werden.

2. Verfahren nach Anspruch 1, **dadurch gekennzeichnet, dass** ein Kernfaden (2) bestehend aus Längsfasern verwendet wird, und dass der abgekürzte Zustand dem Kernfaden (2) durch Zwirnen vor dem Extrudieren verliehen wird.

3. Verfahren nach Anspruch 1, **dadurch gekennzeichnet, dass** ein Kernfaden (2) aus Längsfasern verwendet wird, und dass der abgekürzte Zustand dem Kernfaden (2) durch Kräuseln vor dem Extrudieren verliehen wird.

4. Verfahren nach Anspruch 2 oder 3, **dadurch gekennzeichnet, dass** der durch Zwirnen oder Kräuseln abgekürzte Kernfaden im abgekürzten Zustand durch ein wärmeunbeständiges Material, z.B. durch ein Ionomerwachs, zeitweilig befestigt wird.

## Revendications

1. Procédé de fabrication d'une ligne de fond (1) avec des lests (3), comme exemple pour un filet de pêche, ladite ligne de fond (1) comprenant un fil d'âme longitudinal central (2), lesdits lests (3) contenant le fil d'âme (2) dans une manière concentrique et comprenant un matériau de poids avec une gravité spécifique plus grande que 1, lesdits lests (3) sont formés par extrusion comme un boudin allongé d'une masse plastique étant composée d'un mélange de matériau minéral en poudre et un adhésif en forme d'un matériau plastique convenable, **caractérisé en ce que** les lests (3) sont reliés par extrusion autour du fil d'âme (2) pendant qu'il prend un état raccourci, et que les lests (3) après extrusion et refroidissement sont divisés en lests relativement courts et mutuellement séparés (3') qui restent reliés au fil d'âme (2).

2. Procédé selon la revendication 1, caractérisé en ce que'un fil d'âme (2) est utilisé consistant en filaments longitudinaux, et que le fil d'âme (2) est mis dans l'état raccourci en ce que le fil d'âme (2) est tordu avant l'extrusion.

3. Procédé selon la revendication 1, **caractérisé en ce qu'**un fil d'âme (2) est utilisé consistant en filaments longitudinaux, et que le fil d'âme (2) est mis dans l'état raccourci en ce que le fil d'âme (2) est assemblé avant l'extrusion.

4. Procédé selon la revendication 1, **caractérisé en ce que** le fil d'âme (2) raccourci par retordage ou assemblage est fixé de courte durée dans l'état raccourci au moyens d'un thermo-matériau labile, par exemple une cire d'ionomère.
